(19) **Europäisches Patentamt / European Patent Office / Office européen des brevets**

(11) **EP 1 886 585 B1**

(12) # EUROPEAN PATENT SPECIFICATION

(45) Date of publication and mention
of the grant of the patent:
**15.10.2008 Bulletin 2008/42**

(51) Int Cl.:
*A23L 2/60* (2006.01)      *A23L 1/29* (2006.01)
*A23L 1/30* (2006.01)      *A23F 3/40* (2006.01)

(21) Application number: **06291197.9**

(22) Date of filing: **24.07.2006**

(54) **Improved beverage**

Verbessertes Getränk

Boisson améliorée

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.02.2008 Bulletin 2008/07**

(73) Proprietors:
• **Unilever PLC**
**London**
**Greater London EC4P 4BQ (GB)**
Designated Contracting States:
**CY GB IE**
• **Unilever N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**

(72) Inventor: **Williamson, Ann**
**98742 Rueil-Malmaison Cedex (FR)**

(74) Representative: **Hugot, Alain**
**Unilever Patent Group**
**Colworth House**
**Sharnbrook**
**Bedford, MK44 1LQ (GB)**

(56) References cited:
**JP-A- 2005 176 666      JP-A- 2006 136 244**
**US-A- 5 879 733      US-A1- 2002 034 576**
**US-A1- 2003 143 287      US-A1- 2004 028 793**
**US-A1- 2005 003 068      US-A1- 2006 099 318**

**Description**

**Technical Field of the Invention**

The present invention relates to beverages. More particularly the invention relates to beverages containing catechins, such as tea-based beverages.

**Background of the Invention**

Green tea is a popular beverage which has been consumed in China and Japan for many hundreds of years. Recently, extensive laboratory research and epidemiologic studies have shown that compounds present in green tea (particularly catechins) may reduce the risk of a variety of illnesses. Furthermore, catechins have been shown to suppress accumulation of visceral fat and so may be useful in controlling bodyweight and bodyshape (see, for example, T. Nagao et al., "Tea Catechins Suppress Accumulation of Body Fat in Humans", J. Oleo. Sci., 2001, 50(9), pp.717-728). These studies, along with the increasing complexity of the consumer's palate have led to growth in the consumption of green tea, even in markets (such as the USA and Western Europe) where there is no tradition of green tea consumption.

Although, some of the health benefits of tea may be apparent at consumption rates as low as three cups per day (see, for example, U.Peters et al., "Does tea affect cardiovascular disease? A meta-analysis.", American Journal of Epidemiology, 2001, 154, pp.495-503), many individuals do not even achieve this modest consumption rate on a long term basis.

There have been several attempts to provide beverages with enhanced levels of catechins.

European patent EP 0 762 836 B discloses a beverage whereby cellular hydration and drinkability are enhanced by the combination of green tea solids with selected levels and types of electrolytes and carbohydrates. Unfortunately, however, the presence of significant levels of carbohydrates in the beverage may compromise certain benefits delivered by the catechins. In particular, the high energy contribution of sugars would tend to counteract any benefits of the catechins in terms of controlling bodyweight and/or bodyshape.

US 5 879 733 discloses a beverage containing aspartame and tea extract.

European patent application EP 1 297 749 A discloses a beverage having a concentrated or purified tea extract incorporated therein, containing catechins from 0.092 to 0.5 wt.% and quinic acid in a specific weight ratio with respect to the catechins. The beverage is said to have an improved taste and does not cause an unpleasant aftertaste which will otherwise remain after bitterness or astringency peculiar to catechins is alleviated by the addition of a sweetener. However, the beverages disclosed therein require the addition of quinic acid which itself may bring unwanted taste to the beverage. Furthermore, the beverages are still unpleasantly bitter, especially for consumers used to tea-based beverages having relatively low levels of catechins, such as black tea.

Thus we have recognised that there is a need to provide a beverage which delivers the benefits of high levels of catechins, especially in respect of bodyweight and/or shape management, which beverage has improved taste, especially in respect of bitterness.

We have found that such a need may be met by providing a beverage having a specific composition.

**Tests and Definitions**

BEVERAGE

As used herein the term "beverage" refers to a substantially aqueous drinkable composition suitable for human consumption. Preferably the beverage comprises at least 85% water by weight of the beverage, more preferably at least 90% and most preferably from 95 to 99.9%.

TEA SOLIDS

As used herein, the term "tea solids" refers to dry material extractable from the leaves of the plant *Camellia sinensis* var. *sinensis* and/or *Camellia sinensis* var. *assamica.* The leaves may have been subjected to a so-called "fermentation" step wherein it is oxidised by certain endogenous enzymes that are released during the early stages of "black tea" manufacture. This oxidation may even be supplemented by the action of exogenous enzymes such as oxidases, laccases and peroxidases. Alternatively the leaves may have been partially fermented ("oolong" tea) or substantially unfermented ("green tea").

TEA-BASED BEVERAGE

As used herein, the term "tea-based beverage" refers to a beverage comprising at least 0.01% by weight tea solids by weight of the beverage. Preferably the tea-based beverage comprises from 0.04 to 3% tea solids, more preferably from 0.06 to 2%, most preferably from 0.1 to 1%.

CATECHINS

As used herein the term "catechins" is used as a generic term for catechin, gallocatechin, catechin gallate, gallocatechin gallate, epicatechin, epigallocatechin, epicatechin gallate, epigallocatechin gallate, and mixtures thereof.

DETERMINATION OF CATECHINS AND CAFFEINE IN A BEVERAGE

The amounts of catechins and caffeine in a beverage are determined simultaneously by reverse-phase HPLC as follows:

*Sample Preparation*

9 ml of the beverage are then taken and 1.12 ml of acetonitrile added, along with 1.12 ml of a solution of 2.5 mg/ml EDTA and 2.5 mg/ml ascorbic acid in distilled water. The resulting solution is then decanted into microcentrifuge tubes and centrifuged at a relative centrifugal force of 14000 g for 10 minutes.

*HPLC Analysis conditions*

| | |
|---|---|
| **Column:** | Luna Phenyl hexyl 5μ, 250 x 4.60 mm |
| **Flow rate:** | 1 ml/min |
| **Oven temperature:** | 30°C |

**Solvents:**

A: 2% acetic acid in acetonitrile
B: 2% acetic acid and 0.02 mg/ml EDTA in water

**Injection volume:** 10 μl

**Gradient:**

| Time | % Solvent A | % Solvent B | Step |
|---|---|---|---|
| 0 to 10 min | 5 | 95 | Isocratic |
| 10 to 40 min | 5 - 18 | 95 - 85 | Linear gradient |
| 40 to 50 min | 18 | 82 | Isocratic |
| 50 to 55 min | 50 | 50 | Wash |
| 55 to 75 min | 5 | 95 | Isocratic |

**Quantification:** Peak area relative to a calibration curve constructed daily. Calibration curve is constructed from caffeine and the concentration of catechins is calculated using the relative response factors of the individual catechins to caffeine (from the ISO catechin method - ISO/CD 14502-2). Individual caffeine standards (Sigma, Poole, Dorset, UK) are used as peak identification markers.

SUGARS

As used herein the term "sugars" refers exclusively to digestible mono- and di-saccharides. This includes any sugars from tea solids, milk and fruit juice.

TOTAL ENERGY CONTENT

The total energy content ($E$) of a beverage is defined as the sum of the metabolizable energy of the ingredients present within 100 g of the beverage. It is calculated using Equation 1:

$$E = \sum_{j} f_j c_j \qquad , \qquad (1)$$

wherein $c_j$ is the mass of ingredient j in 100 g of the beverage and $f_j$ is the calorie conversion factor for the ingredient j.

For digestible saccharides and proteins, $f_j$ is typically 16.7 kJ (4.0 kcal) per g. For fats, $f_j$ is 37.7 kJ (9.0 kcal) per g.

Calorie conversion factors are readily available from ingredient manufacturers. Alternatively, the factors may be determined from analysis and comparison of the composition and heats of combustion of dietary material with those of excreted material (see D.A.T. Southgate and J.V.G.A. Durnin, "Calorie conversion factors. An experimental reassessment of the factors used in the calculation of the energy value of human diets.", British Journal of Nutrition, 1970, 24, pp. 517-535).

NON-NUTRITIVE SWEETENER

Non-nutritive sweeteners consist of intense sweeteners, sugar alcohols and mixtures thereof. Intense sweeteners are those materials with a relative sweetness of at least 10, more preferably from 30 to 30000. The intense sweeteners include aspartame, saccharin, acesulfame K, alitame, thaumatin, cyclamate, glycyrrhizin, stevioside, neohesperidine, sucralose, monellin, neotame, mogroside V, MGGR, periandrin I-V, rebaudioside A, stevia extract and mixtures thereof. Sugar alcohols include HSH (hydrogenated starch hydrosylate - also known as polyglycitol), eythritol, arabitol, glycerol, xylitol, sorbitol, mannitol, lactitol, maltitol, isomalt, palatinit and mixtures thereof.

SWEETNESS

As defined herein, the relative sweetness, $R_i$, refers to the sweetness of substance *i* relative to the sweetness of an equivalent weight of sucrose (i.e. sucrose has a relative sweetness of 1). This is a common means of expressing sweetness in the food industry. The relative sweetness of certain non-nutritive sweeteners is given in Table 1.

The sweetness in terms of sucrose, $S_i$, of non-nutritive sweetener *i* present in an amount of $m_i$ (percent by weight of the beverage), is the product of the relative sweetness and the amount, i.e. $S_i = R_i m_i$. Thus, for a mixture of non-saccharide sweeteners, the sweetness in terms of sucrose ($S$) is defined by Equation 2:

$$S = \sum_{i} S_i = \sum_{i} R_i m_i \qquad . \qquad (2)$$

TABLE 1

| Non-Saccharide Sweetener (i) | Relative sweetness ($R_i$) |
|---|---|
| Aspartame | 200 |
| Saccharin | 400 |
| Acesulfame K | 200 |
| Alitame | 2,000 |
| Thaumatin | 2,000 |
| Cyclamate | 35 |
| Glycyrrhizin | 50 |

(continued)

| Non-Saccharide Sweetener (i) | Relative sweetness ($R_i$) |
|---|---|
| Stevioside | 100 |
| Neohesperidine | 1,500 |
| Sucralose | 500 |
| Monellin | 2,000 |
| Neotame | 10,000 |
| Mogroside V | 350 |
| MGGR | 940 |
| Periandrin I-V | 150 |
| Rebaudioside A | 300 |
| Stevia extract | 30 |
| HSH | 0.7 |
| Erythritol | 0.7 |
| Arabitol | 0.5 |
| Glycerol | 0.8 |
| Xylitol | 1.0 |
| Sorbitol | 0.6 |
| Mannitol | 0.6 |
| Lactitol | 0.4 |
| Maltitol | 0.8 |
| Isomalt | 0.6 |
| Palatinit | 0.5 |

## Summary of the Invention

In a first aspect, the present invention provides a beverage having a total energy content of less than 17 kJ per 100 g, wherein the beverage comprises catechins in amount (C) of from 0.04 to 0.4% by weight of the beverage, and non-nutritive sweetener in an amount such that the sweetness (S) of the non-nutritive sweetener in terms of sucrose is less than 7% by weight of the beverage and satisfies the following condition:

$$34 < (S / C) < 115.$$

We have found that such beverages provide a well-balanced flavour in terms of sweetness and bitterness. It is preferred that the ratio (S/C) is less than 105, more preferably less than 95 and most preferably less than 85. Preferably also, the ratio (S/C) is at least 37, more preferably at least 40 and most preferably at least 45. To avoid the beverage becoming overly sweet, it is also preferred that the sweetness (S) is less than 5% by weight of the beverage. Preferably also, the sweetness is at least 1, more preferably at least 2 and most preferably at least 3% by weight of the beverage.
The low energy content of the beverage allows for delivery of the health benefits of catechins without providing an unhealthy amount of calories. It is preferred that the total energy content is less than 5 kJ per 100 g, more preferably less than 2 kJ per 100 g and most preferably from 0.0001 to 1 kJ per 100 g.
Because the sweetness of the beverage is primarily provided by the non-nutritive sweetener it is preferred that the beverage comprises sugars in an amount of less than 0.25% by weight of the beverage, more preferably less than 0.1% and most preferably from 0.001 to 0.05%.
The concentration of non-nutritive sweetener will depend on the amount of catechins and the relative sweetness of the sweetener as set forth above. Typically, however, the beverage will comprise non-nutritive sweetener in an amount of between 0.00001 to 10% by weight of the beverage, more preferably from 0.001 to 1% and most preferably from 0.01 to 0.1%.

In order to minimise the energy contribution of the sweetener, it is preferred that the non-nutritive sweetener comprises intense sweetener. Preferably the non-nutritive sweetener comprises at least 50% intense sweetener by weight of the non-nutritive sweetener, more preferably at least 75% and most preferably from 90 to 100%. The most preferred intense sweeteners, owing to their well-rounded flavour, are sucralose, aspartame, acesulfame K, or a mixture thereof.

We have found that the said ratio of sweetener to catechins is particularly well-suited for delivering a tea-based beverage that has a refreshing tea flavour but is not too bitter. Thus it is preferred that the beverage is a tea-based beverage, preferably a green tea-based beverage.

From a standpoint of microbial stability and taste, it is preferred that the beverage has an acid pH. In particular, the pH (at 20°C) may be from 2 to 5, more preferably from 2.5 to 4.5, most preferably from 3 to 4.

Suitable acidulants include organic acids such as citric, malic, tartaric, ascorbic, salts thereof and mixtures thereof. A particularly well-balanced flavour may be provided when the acid comprises malic acid and/or a salt thereof. Mixtures of citric acid (and/or its salt), malic acid (and/or its salt), and ascorbic acid (and/or its salt) also provide a good flavour. Typically, the concentration of the organic acid and/or salt in the beverage will be from 0.001 to 1%, more preferably from 0.01 to 0.5%.

The beverage preferably comprises flavour. Suitable flavours include natural and synthetic fruit flavours, and/or natural or synthetic herb flavours. Examples of fruit flavours include apple, peach, pear, lemon, lime, mandarin, grapefruit, cranberry, orange, strawberry, grape, kiwi, pineapple, passion fruit, mango, guava, raspberry and cherry. Examples of herb flavours include jasmine, chamomile, rose, mint, hawthorn, chrysanthemum, osmanthus, hibiscus, elderflower and verbena. Surprisingly, we have found that pineapple flavour (natural or synthetic) is particularly effective at masking the bitterness of catechins, therefore it is particularly preferred that the flavour comprises pineapple flavour. The pineapple flavour may be natural or synthetic. Preferably the pineapple flavour comprises 2-propenyl hexanoate. The amount of flavour is preferably between 0.001 and 0.5% by weight of the beverage, more preferably from 0.05 to 0.19%.

The beverage may additionally or alternatively comprise a weight management active. Suitable actives include biotin, pantothenic acid (vitamin B5), vitamin B6, niacin, magnesium, yerba mate extract, guarana extract, hydroxycitric acid and mixtures thereof.

In a most preferred embodiment, the beverage comprises caffeine in an amount of between 0.001 to 0.1% by weight of the beverage, more preferably from 0.005 to 0.05%. Caffeine is particularly preferred as it has been shown to assist in body management, especially in weight control and/or control of body shape.

The beverage of this invention may be used as a medicament or in the preparation of a medicament. In particular, the beverage may be used to provide any of the benefits associated with consumption of catechins such as treating and/or preventing cancer; and/or treating and/or preventing cardio-vascular disease. It is particularly preferred to use the beverage for controlling the bodyweight and/or shape of an individual. For example, the beverage may be used in a method of providing at least one of these benefits to an individual, the method comprising administering to the individual the beverage. Preferably the beverage is administered orally.

## Detailed Description

The present invention will be further described with reference to the following example.

EXAMPLE 1

Five beverage products were made having the formulations given in Table 2.

TABLE 2

| Ingredient (g) | Comparative Product 1 | Product 2 | Product 3 | Comparative Product 4 | Product 5 |
|---|---|---|---|---|---|
| Green tea powder* | 2.500 | 2.500 | 2.500 | 2.500 | 3.840 |
| Tri-sodium citrate | 0.500 | 0.500 | 0.500 | 0.500 | 0.300 |
| Citric acid | 1.000 | 1.000 | 1.000 | 1.000 | 0.900 |
| Malic acid | 0.500 | 0.500 | 0.500 | 0.500 | 0.300 |
| Ascorbic acid | 0.200 | 0.200 | 0.200 | 0.200 | 0.200 |

(continued)

| Ingredient (g) | Comparative Product 1 | Product 2 | Product 3 | Comparative Product 4 | Product 5 |
|---|---|---|---|---|---|
| Sucralose | 0.120 | 0.080 | 0.060 | 0.040 | 0.100 |
| Acesulfame K | 0.050 | 0.035 | 0.025 | 0.017 | 0.044 |
| Flavour** | 1.150 | 1.150 | 1.150 | 1.150 | 1.150 |
| Deionised Water | To 1000 | To 1000 | To 1000 | To 1000 | To 1000 |
| | | | | | |
| **Properties** | | | | | |
| $C$ - Catechins (wt.%) | 0.07 | 0.07 | 0.07 | 0.07 | 0.11 |
| $S$ - Sweetness (wt.%) | 7.0 | 4.7 | 3.5 | 2.3 | 5.9 |
| Caffeine (wt.%) | 0.013 | 0.013 | 0.013 | 0.013 | 0.021 |
| pH | 3.5 | 3.5 | 3.5 | 3.5 | 3.5 |
| *Ceytea™ from Premium Exports Ceylon Ltd (Sri Lanka).<br>**Elderflower and Virbena. | | | | | |

The products were made using the following protocol (all dissolution was performed at 20°C):

1. Place half of the water in a glass beaker of the appropriate size.
2. Dissolve the green tea powder and tri sodium citrate together in a small amount of water and add to the glass beaker.
3. Dissolve flavours and sucralose in a small amount of water and add to the beaker.
3. Dissolve the acesulfame K in a small amount of water and add to the beaker.
4. Dissolve all the acids together (citric, malic and ascorbic) in a small amount of water and add to the beaker.
5. Add water to make up to the desired mass.
6. Fill the resulting solution into 330 ml cans and seal.
7. Pasteurise the cans at 70°C for 10 minutes in a bench-top pasteuriser.

The canned products were stored at +5°C for 1 week and then assessed by a taste panel. The results are shown in Table 3.

TABLE 3

| Product | ($S$ / $C$) | Taste |
|---|---|---|
| 1 | 100 | Just acceptable - sweetness builds up in mouth and tea flavour is weak. |
| 2 | 67 | Well-balanced flavour; not bitter and has refreshing tea character. |
| 3 | 50 | Becoming unbalanced; slightly bitter. |
| 4 | 33 | Too bitter; refreshing but not pleasurable. |
| 5 | 54 | Well-balanced flavour; not bitter and has refreshing tea character. |

## Claims

1. A beverage having a total energy content of less than 17 kJ per 100 g, wherein the beverage comprises catechins in amount (C) of from 0.04 to 0.4% by weight of the beverage and non-nutritive sweetener in an amount such that the sweetness (S) of the non-nutritive sweetener in terms of sucrose is less than 7% by weight of the beverage, wherein S is defined by the following equation:

$$S = \sum_i R_i m_i$$

wherein $R_i$ is the sweetness of non-nutritive sweetener $i$ relative to an equivalent weight of sucrose and $m_i$ is the amount of non-nutritive sweetener i present in percent by weight of the beverage, **characterised in that** the beverage comprises non-nutritive sweetener in an amount satisfying the following condition:

$$34 < (S / C) < 115.$$

2. A beverage according to claim 1 wherein the total energy content is less than 5 kJ per 100 g, preferably less than 2 kJ per 100 g.

3. A beverage according to claim 1 or claim 2 wherein the beverage comprises sugars in an amount of less than 0.25% by weight of the beverage.

4. A beverage according to any one of the preceding claims wherein the beverage comprises non-nutritive sweetener in an amount of between 0.00001 to 10% by weight of the beverage.

5. A beverage according to any one of the preceding claims wherein the non-nutritive sweetener comprises intense sweetener.

6. A beverage according to claim 5 wherein the intense sweetener is sucralose, aspartame, acesulfame K, or a mixture thereof.

7. A beverage according to any one of the preceding claims wherein the beverage is a tea-based beverage.

8. A beverage according to any one of the preceding claims wherein the beverage has a pH of from 2 to 5.

9. A beverage according to claim 8 wherein the beverage has a pH of from 3 to 4.

10. A beverage according to any one of the preceding claims wherein the beverage comprises organic acid.

11. A beverage according to claim 10 wherein the organic acid comprises malic acid and/or a salt thereof.

12. A beverage according to any preceding claim wherein the beverage comprises flavour.

13. A beverage according to claim 12 wherein the beverage comprises the flavour in an amount of between 0.001 and 0.5% by weight of the beverage.

14. A beverage according to claim 12 or claim 13 wherein the flavour comprises fruit flavour.

15. A beverage according to claim 14 wherein the fruit is pineapple.

16. A beverage according to any one of the preceding claims wherein the beverage comprises caffeine in an amount of between 0.001 to 0.1% by weight of the beverage.

17. A non-therapeutic method of controlling the bodyweight and/or shape of an individual comprising the step of administering to the individual a beverage according to any one of the preceding claims.

18. Non-therapeutic use of a beverage according to any one of claims 1 to 16 for the management of the bodyweight and/or shape of an individual.

**Patentansprüche**

1.  Getränk, das einen Gesamtenergiegehalt von weniger als 17 kJ pro 100 g hat, wobei das Getränk Catechine in einer Menge (C) von 0,04 bis 0,4 Gewichts-% des Getränks und kalorienfreies Süßungsmittel in einer solchen Menge umfasst, dass die Süße (S) des kalorienfreien Süßungsmittels als Saccharose weniger als 7 Gewichts-% des Getränks ist, wobei S durch die folgende Gleichung definiert wird:

$$S = \sum_i R_i m_i$$

worin $R_i$ die Süße des kalorienfreien Süßungsmittels i im Vergleich zu einem äquivalenten Gewicht an Saccharose ist und $m_i$ die Menge an kalorienfreiem Süßungsmittel i, das vorliegt, in Gewichts-% des Getränks ist, **dadurch gekennzeichnet, dass** das Getränk kalorienfreies Süßungsmittel in einer Menge umfasst, die der folgenden Bedingung genügt:

$$34 < ( S / C ) < 115.$$

2.  Getränk nach Anspruch 1, wobei der Gesamtenergiegehalt weniger als 5 kJ pro 100 g, vorzugsweise weniger als 2 kJ pro 100 g, ist.

3.  Getränk nach Anspruch 1 oder Anspruch 2, wobei das Getränk Zucker in einer Menge von weniger als 25 Gewichts-% des Getränks umfasst.

4.  Getränk nach einem der vorangehenden Ansprüche, wobei das Getränk kalorienfreies Süßungsmittel in einer Menge von zwischen 0,00001 und 10 Gewichts-% des Getränks umfasst.

5.  Getränk nach einem der vorangehenden Ansprüche, wobei das kalorienfreie Süßungsmittel Intensivsüßstoff umfasst.

6.  Getränk nach Anspruch 5, wobei der Intensivsüßstoff Sucralose, Aspartam, Acesulfam K oder ein Gemisch davon ist.

7.  Getränk nach einem der vorangehenden Ansprüche, wobei das Getränk ein Getränk auf Teebasis ist.

8.  Getränk nach einem der vorangehenden Ansprüche, wobei das Getränk einen pH von 2 bis 5 hat.

9.  Getränk nach Anspruch 8, wobei das Getränk einen pH von 3 bis 4 hat.

10. Getränk nach einem der vorangehenden Ansprüche, wobei das Getränk organische Säure umfasst.

11. Getränk nach Anspruch 10, wobei die organische Säure Äpfelsäure und/oder ein Salz davon umfasst.

12. Getränk nach einem vorangehenden Anspruch, wobei das Getränk Aroma umfasst.

13. Getränk nach Anspruch 12, wobei das Getränk das Aroma in einer Menge von zwischen 0,001 und 0,5 Gewichts-% des Getränks umfasst.

14. Getränk nach Anspruch 12 oder Anspruch 13, wobei das Aroma Fruchtaroma umfasst.

15. Getränk nach Anspruch 14, wobei die Frucht Ananas ist.

16. Getränk nach einem der vorangehenden Ansprüche, wobei das Getränk Koffein in einer Menge zwischen 0,001 und 0,1 Gewichts-% des Getränks umfasst.

17. Nicht-therapeutisches Verfahren zur Kontrolle des Körpergewichts und/oder der Figur eines Individuums, umfassend den Schritt des Verabreichens an das Individuum eines Getränks nach einem der vorangehenden Ansprüche.

18. Nicht-therapeutische Verwendung eines Getränks nach einem der Ansprüche 1 bis 16 zur Beeinflussung des Körpergewichts und/oder der Figur eines Individuums.

## Revendications

1. Boisson ayant une teneur énergétique totale inférieure à 17 kJ pour 100 g, laquelle boisson comprend des catéchines en une quantité (C) de 0,04 à 0,4% en poids de la boisson, et un édulcorant non nutritif en une quantité telle que la sucrosité (S) de l'édulcorant non nutritif en termes de saccharose soit inférieure à 7% en poids de la boisson, dans laquelle S est définie par l'équation suivants :

$$S = \sum_i R_i m_i$$

dans laquelle $R_i$ est la sucrosité de l'édulcorant non nutritif $i$ par rapport à un poids équivalent de saccharose et $m_i$ est la quantité d'édulcorant non nutritif i présente en pourcentage en poids de la boisson, **caractérisée en ce que** la boisson comprend l'édulcorant non nutritif en une quantité satisfaisant à la condition suivante :

$$34 < (S / C) < 115.$$

2. Boisson selon la revendication 1, dans laquelle la teneur énergétique totale est inférieure à 5 kJ pour 100 g, de préférence inférieure à 2 kJ pour 100 g.

3. Boisson selon la revendication 1 ou la revendication 2, laquelle boisson comprend des sucres en une quantité inférieure à 0,25 % en poids de la boisson.

4. Boisson selon l'une quelconque des revendications précédentes, laquelle boisson comprend un édulcorant non nutritif en une quantité comprise entre 0,00001 et 10% en poids de la boisson.

5. Boisson selon l'une quelconque des revendications précédentes, dans laquelle l'édulcorant non nutritif comprend un édulcorant intense.

6. Boisson selon la revendication 5, dans laquelle l'édulcorant intense est le sucralose, l'aspartame, l'acésulfame K, ou un mélange de ceux-ci.

7. Boisson selon l'une quelconque des revendications précédentes, laquelle boisson est une boisson à base de thé.

8. Boisson selon l'une quelconque des revendications précédentes, laquelle boisson a un pH de 2 à 5.

9. Boisson selon la revendication 8, laquelle boisson a un pH de 3 à 4.

10. Boisson selon l'une quelconque des revendications précédentes, laquelle boisson comprend un acide organique.

11. Boisson selon la revendication 10, dans laquelle l'acide organique comprend de l'acide malique et/ou un de ses sels.

12. Boisson selon l'une quelconque des revendications précédentes, laquelle boisson comprend une saveur.

13. Boisson selon la revendication 12, laquelle boisson comprend la saveur en une quantité comprise entre 0,001 et 0,5 % en poids de la boisson .

14. Boisson selon la revendication 12 ou la revendication 13, dans laquelle la saveur comprend une saveur fruitée.

15. Boisson selon la revendication 14, dans laquelle le fruit est l'ananas.

16. Boisson selon l'une quelconque des revendications précédentes, laquelle boisson comprend de la caféine en une quantité comprise entre 0,001 et 0,1 % en poids de la boisson.

17. Procédé non thérapeutique pour contrôler le poids corporel et/ou la forme d'un individu, comprenant l'étape consistant à administrer à l'individu une boisson selon l'une quelconque des revendications précédentes.

18. Utilisation non thérapeutique d'une boisson selon l'une quelconque des revendications 1 à 16, pour la gestion du poids corporel et/ou de la forme d'un individu.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0762836 A
- US 5879733 A

- EP 1297749 A

**Non-patent literature cited in the description**

- **T. NAGAO et al.** Tea Catechins Suppress Accumulation of Body Fat in Humans. *J. Oleo. Sci.,* 2001, vol. 50 (9), 717-728
- **U.PETERS et al.** Does tea affect cardiovascular disease? A meta-analysis. *American Journal of Epidemiology,* 2001, vol. 154, 495-503

- **D.A.T. SOUTHGATE ; J.V.G.A. DURNIN.** Calorie conversion factors. An experimental reassessment of the factors used in the calculation of the energy value of human diets. *British Journal of Nutrition,* 1970, vol. 24, 517-535